# EUROPEAN PATENT SPECIFICATION

(11) **EP 4 343 902 B1**
(45) Date of publication and mention of the grant of the patent: **29.10.2025**
(21) Application number: 22853301.4
(22) Date of filing: 19.07.2022
(51) Int. Cl.: H01M 10/04, G01B 7/31, G01B 11/00, G01B 11/27, G01B 15/00

(54) **UNIT CELL ALIGNMENT DEVICE AND ALIGNMENT METHOD**
EINHEITSZELLENAUSRICHTUNGSVORRICHTUNG UND AUSRICHTUNGSVERFAHREN
DISPOSITIF D'ALIGNEMENT DE CELLULES UNITAIRES ET PROCÉDÉ D'ALIGNEMENT

(30) Priority: 03.08.2021 KR 20210101704
(43) Date of publication of application: 27.03.2024
(73) Proprietor: LG Energy Solution, Ltd., Seoul 07335 (KR)
(72) Inventor: KIM, Yoong, Daejeon 34122 (KR); GWON, Yeong Tae, Daejeon 34122 (KR)
(74) Representative: Plasseraud IP
(86) International application number: PCT/KR2022/010488
(87) International publication number: WO 2023/013922

(56) References cited:
- WO-A1-2020/159295
- WO-A1-2021/096183
- KR-A- 20120 060 705
- KR-A- 20120 137 143
- KR-A- 20130 000 617
- KR-A- 20160 051 347
- KR-A- 20190 091 745
- KR-A- 20190 092 019

## Description

### [Technical Field]

The present invention relates to a unit cell aligning device and method.

### [Background Art]

With increasing technological development and demand for mobile devices, a rechargeable secondary battery is widely used as energy sources for various mobile devices. In addition, the secondary battery is attracting attention as an energy source for an electric vehicle, a hybrid vehicle and the like, which are proposed as a solution to air pollution caused by existing gasoline and diesel vehicles.

The secondary battery is classified into a coin-shaped battery, a cylindrical battery, a rectangular battery, and a pouch-shaped battery according to the shape of the battery case in which the electrode assembly is incorporated. In general, an electrode assembly incorporated in the battery case is classified into a jelly-roll type in which a separation membrane is interposed and wound up between an anode and a cathode, a stack type in which a plurality of unit cells with the separation membrane interposed between the anode and the cathode are stacked, and a stack/folding type in which the unit cells are wound with a separation membrane.

Among them, the stack/folding type can be manufactured by conveying the unit cells including the electrodes and the separation membrane, seating them on the separation membrane, and winding it with the separation membrane. At this time, if the electrodes are distorted during transportation of the unit cells, the unit cells are misaligned, and problems such as overhang defects may occur.

### [Prior Art Document]

### [Patent Document]

Korean Laid-open Patent Publication No. 10-2021-0055186 WO2021/096183 A1
KR2013/0000617 A
KR2012/0137143 A
WO2020/159295 A1

### [Disclosure]

### [Technical Problem]

An object of the present invention is to improve the alignment accuracy of unit cells seated on a separation membrane.

Another object of the present invention is to improve overhang defects.

Another object of the present invention is to improve folding gap defects.

### [Technical Solution]

The present invention is defined in the independent claims. Preferred embodiments are defined in the dependent claims respectively.

### [Advantageous Effects]

One of the effects of the present invention is to improve the alignment accuracy of the unit cells seated on the separation membrane.

Another effect of the present invention is to improve overhang defects.

Another effect of the present invention is to improve folding gap defects.

### [Description of Drawings]

FIG. 1 is a side view of a unit cell aligning device according to an embodiment of the present invention.
FIG. 2 is a plan view for explaining alignment of unit cells according to an embodiment of the present invention.
FIG. 3 is a plan view for explaining further alignment of unit cells according to an embodiment of the present invention.

### [Best Mode]

Embodiments of the present invention will now be described in detail with reference to the accompanying drawings. For convenience of explanation, all or part of each configuration may be expressed exaggeratedly in the drawings.

Furthermore, the present invention is not limited to the accompanying drawings or the contents described in this specification. The invention is defined in the appended claims.

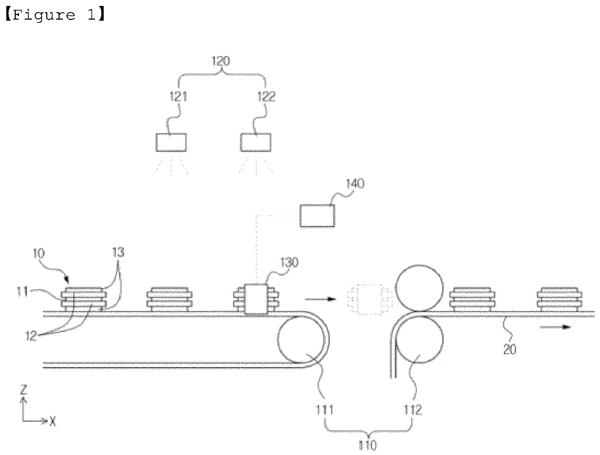

FIG. 1 is a side view of a unit cell aligning device according to an embodiment of the present invention.

A unit cell 10 aligning device according to an embodiment of the present invention includes a conveying unit 110, a vision unit 120, a gripper 130 and a control unit 140.

The unit cell 10 includes electrodes 11 and 13 and a separation membrane 12. Specifically, the unit cell 10 may have a structure in which the electrodes 11 and 13 and the separation membrane 12 are alternately laminated. According to an embodiment of the present invention, the unit cell 10 may include the first electrode 11, the separation membrane 12 stacked on both sides of the first electrode 11, and the second electrode 13 stacked on each separation membrane 12 stacked on both sides of the first electrode 11, but the structure of the unit cell 10 is not limited thereto.

One of the first electrode 11 and the second electrode 13 may be an anode and the other may be a cathode. For example, the first electrode 11 may be the anode and the second electrode 13 may be the cathode. A cross-sectional area of the first electrode 11 which is the anode may be larger than the cross-sectional area of the second electrode 13 which is the cathode. Here, the cross-sectional area means a cross-sectional area on a plane defined by a first direction x and a second direction **y.** Each of the first electrode 11 and the second electrode 13 may have a structure in which a tab is formed at one end portion, but the tab of the electrode is omitted in the drawings.

The separation membrane 12 is disposed between the electrodes 11 and 13. The cross-sectional area of the separation membrane 12 may be larger than the cross-sectional areas of the electrodes 11 and 13. As described above, the cross-sectional area of the first electrode 11 which is the anode may be larger than the cross-sectional area of the second electrode 13 which is the cathode. In this case, the cross-sectional area may decrease in order of the separation membrane 12, the first electrode 11 and the second electrode 13.

The conveying unit 110 conveys the unit cells 10. The conveying unit 110 may include a first conveying unit 111 and a second conveying unit 112.

The first conveying unit 111 conveys the unit cell 10 including the electrodes 11 and 13 and the separation membrane 12 in the first direction **x.** The first conveying unit 111 can continuously transport a plurality of unit cells 10 spaced apart from each other by a predetermined interval. The first conveying unit 111 may be a conveyor belt.

As will be described later, the first conveying unit 111 may have a first area A1 that is an area in which the electrodes 11 and 13 are measured by a first vision unit 122, and a second area A2 that is an area in which the electrodes 11 and 13 are griped by a gripper 130 and measured by the second vision unit 122.

The second conveying unit 112 conveys the separation membrane 20 and the unit cells 10 disposed on the separation membrane 20. At this time, the unit cell 10 is supplied to the second conveying unit 112 by the gripper 130 to be described later and can be seated on the separation membrane 20. Therefore, the stack/folding type electrode assembly can be formed by winding the separation membrane 20 with the unit cells 10 seated thereon in a subsequent process.

The second conveying unit 112 may be a pair of rollers. Accordingly, the unit cell 10 can be loaded between the pair of rollers by the gripper 130 and pressed together with the separation membrane 20.

The vision unit 120 can measure the positional information of the electrodes 11 and 13, specifically measure twisted angles of the electrodes 11 and 13. However, the vision unit 120 can also measure other types of positional information such as the positions of the electrodes 11 and 13 and the alignment state between the electrodes 11 and 13, and can measure the positional information of the separation membrane 12 depending on the design. Information measured by the vision unit 120 can be conveyed to the control unit 140.

The vision unit 120 includes the first vision unit 121 and the second vision unit 122. Each of the first vision unit 121 and the second vision unit 122 can measure the twisted angle θ1 of the electrodes 11 and 13 in different areas. Each of the first vision unit 121 and the second vision unit 122 can include a vision device, which can be a camera, X-ray, or the like.

The gripper 130 can serve to grip and move the unit cell 10. Specifically, the gripper 130 can grip the unit cell 10 and supply the gripped unit cell 10 to the second conveying unit 112. The gripper 130 can grip one end or both ends of the unit cell 10. The gripper 130 includes a body and an arm, and the arm can grip the unit cell 10 and move it while being fixed.

The control unit 140 controls the gripper 130. The control unit 140 can control a moving distance, a moving speed, an angle, and the like of the gripper 130. At this time, the control unit 140 can control the gripper 130 on the basis of information measured by the vision unit 120.

### [Detailed description of the invention]

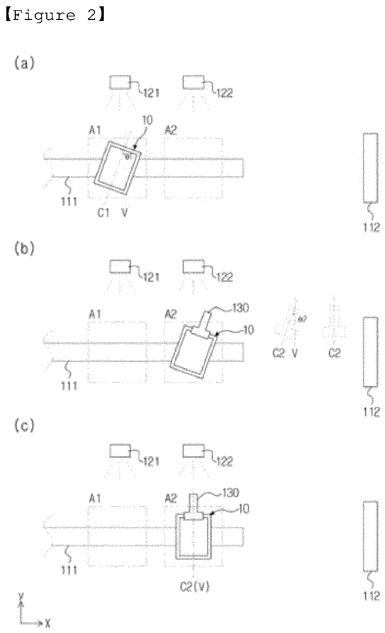

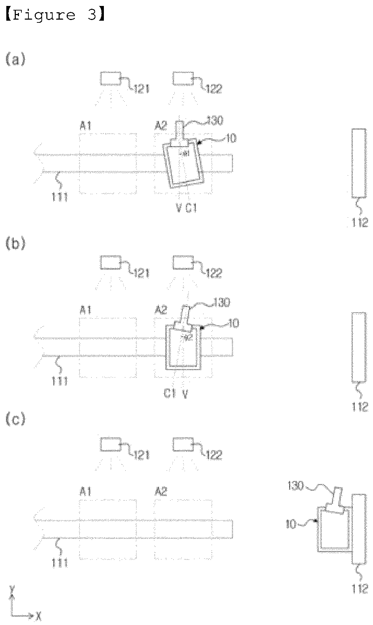

Hereinafter, the vision unit 120, the gripper 130 and the control unit 140 of the unit cell aligning device according to an embodiment of the present invention will be described in more detail with reference to FIGS. 2 and 3.

FIG. 2 is a plan view for explaining alignment of a unit cell according to an embodiment of the present invention.

The first conveying unit 111 has the first area A1 and the second area A2 adjacent to the first area A1. The unit cell 10 is conveyed along the first direction **x,** and the unit cell 10 sequentially passes through the first area A1 and the second area A2 accordingly. The first vision unit 121 is disposed on the first area A1 of the conveying unit 111, and the second vision unit 122 is disposed on the second area A2 of the conveying unit 111. In other words, the first area A1 is a first measurement area for measuring the unit cell 10 with the first vision unit 121, and the second area A2 is a second measurement area for measuring the unit cell 10 that has passed the first area A1 with the second vision unit 122. At this time, the unit cell 10 stops for a certain period of time in the first area A1 while being conveyed to the first conveying unit 111 and is measured by the first vision unit 121, and is conveyed again, stops for a certain period of time in the second area A2 and can be measured with the vision unit 122. Further, the second area A2 may be an area in which the unit cell 10 is gripped by the gripper 130, as will be described later. On the other hand, the first area A1 and the second area A2 are areas introduced for convenience of explanation, and may not have boundaries that is visually confirmed with each other.

On the other hand, in FIGS. 2 and 3, although each of the first vision unit 121 and the second vision unit 122 may be seen to be disposed on the second direction y of each of the first area A1 and the second area A2 of the first conveying unit 110, this is only for the purpose of helping understanding of the explanation, and each of the first vision unit 121 and the second vision unit 122 is disposed on a third direction z of each of the first area A1 and the second area A2 of the first conveying unit 110.

Further, as described above, the cross-sectional area of the separation membrane 12 may be larger than the cross-sectional areas of the electrodes 11 and 13, and the unit cell 10 is shown to have a structure in which the separation membrane 12 protrudes outside the outermost electrode 13 in the drawing.

Referring to FIG. 2(a), the first vision unit 121 measures the twisted angle θ1 of the electrodes 11 and 13 in the first area A1 of the first conveying unit 111.

In this specification, the twisted angle θ1 of the electrodes 11 and 13 is an angle that is formed by a virtual line V in the second direction y perpendicular to the first direction x on the plane and a central axis C1 of the electrodes 11 and 13. The central axis C1 of the electrodes 11 and 13 is a central axis in the second direction y when the electrodes 11 and 13 are not twisted and are ideally aligned. However, the central axis C1 of the misaligned electrodes 11 and 13 may not be directed in the second direction y.

The first vision unit 121 measures the twisted angle θ1 of at least one of the first electrode 11 and the second electrode 13. The first vision unit 121 may measure the twisted angle θ1 of the first electrode 11. The first vision unit 121 can measure the twisted angle θ1 of the first electrode 11 disposed inside the unit cell 10 instead of the second electrode 13, which is the outermost electrode. Accordingly, the unit cells 10 can be aligned on the basis of the first electrode 11. As described above, the first electrode 11 may be an anode having a larger cross-sectional area than that of the second electrode 13, and thus overhang defect can be improved, by aligning the unit cells 10 on the basis of the first electrode 11 which is a cathode. However, the embodiment is not limited thereto, and the first vision unit 121 may measure the twisted angle of the second electrode 13 or measure the twisted angles of each of the first electrode 11 and the second electrode 13.

Referring to FIG. 2(b), the unit cell 10 is conveyed to the second area A2 of the first conveying unit 111, and the gripper 130 also moves to the second area A2 of the first conveying unit 111 to grip the unit cell 10.

At this time, the control unit 140 adjusts an angle θ2 of the gripper 130 on the basis of the twisted angle θ1 of the electrodes 11 and 13 measured by the first vision unit 121 before the gripper 130 grips the unit cell 10. Specifically, the control unit 140 adjusts the angle θ2 of the gripper 130, by rotating the gripper 130 by the twisted angle θ1 of the electrodes 11 and 13. Therefore, the central axis C2 of the gripper 130 after adjustment is parallel to the central axis C1 of the electrode 11 and 13. The angle θ2 of the gripper 130 may be adjusted before movement of the gripper 130, and may also be adjusted during movement or after movement.

In this specification, the angle θ2 of the gripper 130 is an angle that is formed by the virtual line V in the second direction y perpendicular to the first direction x on the plane and the central axis C2 of the gripper 130. The central axis C2 of the gripper 130 is a central axis in the second direction y when the gripper 130 is in an unadjusted and aligned state. However, after adjustment as shown in the drawing, the central axis C2 of the gripper 130 may not be directed in the second direction **y.**

Referring to FIG. 2(c), after the gripper 130 grips the unit cell 10, the control unit 140 returns the gripper 130 so that the angle θ2 of the gripper 130 becomes the angle before adjustment. In other words, after the gripper 130 grips the unit cell 10, the control unit 140 rotates the gripper 130 again by the angle at which the gripper 130 rotates before gripping the unit cell 10 to return the gripper 130. Therefore, the central axis C2 of the gripper 130 is directed to the second direction y again, and becomes parallel to any virtual line V in the second direction **y.** The returned gripper 130 is still located in the second area A2 of the conveying unit 111.

As described above, the unit cell aligning device according to an embodiment of the present invention grips the unit cell 10 in a state in which the electrodes 11 and 13 of the unit cell 10 are rotated by the twisted angle θ1, and returns the gripper 130 that grips the unit cell 10, thereby performing a primary alignment for the unit cell 10. However, even after such alignment, misalignment of the unit cells 10 may still occur. Therefore, according to an embodiment of the present invention, further alignment of unit cells 10 may be performed as described below.

FIG. 3 is a plan view for explaining further alignment of unit cells according to an embodiment of the present invention.

Referring to FIG. 3(a), the second vision unit 122 further measures the twisted angle θ1 of the electrodes 11 and 13, while being gripped by the gripper 130, after the gripper 130 returns in the second area A2 of the first conveying unit 111. Ideally, the reason is that the alignment of the unit cells 10 needs to be aligned by the primary correction described in FIG. 2, but alignment errors of the unit cells 10 may still occur due to errors in measurement or adjustment.

The second vision unit 122 also measures the twisted angle θ1 of at least one of the first electrode 11 and the second electrode 13. It may be desirable for the second vision unit 122 to measure the twisted angle of the same electrode as the electrode measured by the first vision unit 121 in view of further alignment. For example, the second vision unit 122 may measure the twisted angle θ1 of the first electrode 11 which is the anode, in the same way as the first vision unit 121. However, the embodiment is not limited thereto, and the second vision unit 122 may measure the twisted angle of the second electrode 13 together with the first vision unit 121, or measure the twisted angle of each of the first electrode 11 and the second electrode 13. If necessary, the twisted angle of an electrode different from the electrode measured by the first vision unit 121 can also be measured.

Referring to FIG. 3(b), the control unit 140 further adjusts the angle θ2 of the returned gripper 130 on the basis of the twisted angle θ1 of the electrodes 11 and 13 measured by the second vision unit 122. Specifically, the control unit 140 further adjusts the angle θ2 of the gripper 130, by rotating the gripper 130 by the twisted angle θ1 of the electrodes 11 and 13 after the gripper 130 returns. Therefore, the central axis C2 of the gripper 130 may not be directed to the second direction y again. The angle θ2 of the gripper 130 may be further adjusted in the second area A2 of the first conveying unit 111, may be adjusted during movement of the gripper 130 to the second conveying unit 112, or may be adjusted after movement.

Referring to FIG. 3(c), the control unit 140 can further control the gripper 130 to maintain the adjusted angle and supply the unit cell 10 to the second conveying unit 112. That is, the control unit 140 can control the gripper 130 gripping the unit cell 10 to maintain the adjusted angle and move the unit cell 10 to the second conveying unit 112 in the second area A2 of the first conveying unit 111. Therefore, the unit cells 10 can be supplied to the second carrier 112 with improved alignment.

As described above, according to an embodiment of the present invention, the alignment of the unit cell 10 can be corrected by controlling the angle θ2 of the gripper 130 that grips the unit cell 10. Also, the alignment of the unit cells 10 can be further improved by performing two corrections before and after the unit cells 10 are gripped by the gripper 130. In addition, by providing the unit cells 10 in an aligned state, the alignment accuracy of the unit cells 10 seated on the separation membrane 20 can be improved, and folding gap defects can also be improved accordingly. In addition, by aligning the unit cells 10 on the basis of the first electrode 11 which is the anode, the overhang defect can be further improved.

A unit cell aligning method of the present invention includes a step of conveying the unit cell 10 including the electrodes 11 and 13 and the separation membrane 12 in the first direction x, a step of measuring the twisted angle θ1 of the electrodes 11 and 13, a step of adjusting the angle θ2 of the gripper 130 on the basis of the measured twisted angle θ1 of the electrodes 11 and 13, a step of gripping the unit cell 10 with the gripper 130 whose angle is adjusted, and a step of returning the gripper 130 so that the angle θ2 of the gripper 130 gripping the unit cell 10 becomes an angle before adjustment.

In addition, the unit cell aligning method of the present invention may further include a step of further measuring the twisted angle θ1 of the electrodes 11 and 13 after the gripper 130 is returned, and a step of further adjusting the angle θ2 of the gripper 130 on the basis of the additionally measured twisted angle of the electrodes 11 and 13.

On the other hand, the unit cell conveying step may include a first conveying step of conveying the electrodes 11 and 13 to the first area A1 in which the twisted angle θ1 of the electrodes 11 and 13 is measured, and a second conveying step of conveying the electrodes 11 and 13 to the second area A2 gripped by the gripper 130. At this time, the step of further measuring the twisted angle θ2 of the electrodes 11 and 13 can be performed in the second area A2.

Since other descriptions are applicable in substantially the same manner as the description of the unit cell aligning device according to an embodiment of the present invention, detailed descriptions thereof will be omitted.

Although the unit cell aligning device and method according to an embodiment of the present invention have been described above, the invention is defined in the appended claims.

In this specification, the order of first, second, etc. is to distinguish components from each other and does not mean a priority between components or an absolute order. In some parts of the specification, a first component may be referred to as a second component in other parts of the specification.

In this specification, directions such as a first direction x, a second direction y, and a third direction z have been described on the basis of the drawings. Of course, the directions described herein can be described differently depending on the point of view.

In this description, the terms and expressions herein should be interpreted broadly and not in a restrictive sense. As used herein, the term "comprising" does not exclude the presence or addition of one or more other components in addition to the recited components. In this specification, the singular forms include the plural forms unless the context clearly dictates otherwise. Further, each embodiment is combinable with each other, and unless inconsistent, and contents described in specific embodiment is applicable to other embodiments unless inconsistent.

### [Description of symbols]

- 10:: Unit cell,
- 11:: First electrode,
- 12:: Separation membrane,
- 13:: Second electrode,
- 20:: Separation membrane,
- 110:: conveying unit,
- 111:: First conveying unit,
- 112:: Second conveying unit,
- 120:: Vision unit,
- 121:: First vision unit,
- 122:: Second vision unit,
- 130:: Gripper,
- 140:: Control unit

## Claims

1. A unit cell (10) aligning device, comprising:
a first conveying unit (110) which is configured to convey a unit cell (10) including an electrode (11,13) and a separation membrane (20) in a first direction;
a first vision unit (121) that is configured to measure a twisted angle of the electrode (11,13);
**characterized in that**, the unit cell (10) aligning device further comprises
a gripper (130) that is configured to grip and move the unit cell (10); and
a control unit (140) that is configured to control the gripper (130),
wherein the control unit (140) is configured to adjust an angle of the gripper (130) from an aligned angle to a twisted angle of the electrode measured by the first vision unit (121) before the gripper (130) grips the unit cell (10), and the control unit (140) is configured to return the gripper (130) so that the angle of the gripper (130) becomes the aligned angle after the gripper (130) grips the unit cell (10),
the twisted angle of the electrode (11,13) is an angle formed by a central axis (C1,C2) of the electrode (11,13) relative to a virtual line (V) in a second direction (y) perpendicular to the first direction (x), and
the angle of the gripper (130) is an angle formed by a central axis (C1,C2) of the gripper (130) relative to the virtual line (V) in the second direction (y).

2. The unit cell (10) aligning device according to claim 1, wherein the control unit (140) is configured to rotate the gripper (130) from the virtual line (V) to the twisted angle of the electrode (11,13), before the gripper (130) grips the unit cell (10).

3. The unit cell (10) aligning device according to claim 1, wherein the electrode (11,13) is a first electrode (11) and the separation membrane (20) is a first separation membrane, the unit cell (10) further including a second separation membrane stacked on the first electrode (11) opposite the first separation membrane and two second electrodes (13) stacked on the first and second separation membranes respectively, and the first vision unit (121) is configured to measure the twisted angle of the first electrode (11).

4. The unit cell aligning device according to claim 3, wherein the first electrode (11) is an anode, and the second electrode (13) is a cathode.

5. The unit cell (10) aligning device according to claim 1, further comprising a second vision unit (122) that is configured to measure a second twisted angle of the electrode after the gripper is returned, wherein the control unit (140) is configured to further adjust the angle of the gripper (130) from the aligned angle to the second twisted angle of the electrode (11,13) measured by the second vision unit (122).

6. The unit cell (10) aligning device according to claim 5, wherein the control unit (140) is configured to rotate the gripper (130) from the virtual line (V) to the second twisted angle of the electrode (11,13) after the gripper (130) is returned.

7. The unit cell (10) aligning device according to claim 5, wherein the electrode (11,13) is a first electrode (11) and the separation membrane (12) is a first separation membrane, the unit cell (10) further including, a second separation membrane stacked on the first electrode (11) opposite the first separation membrane and two second electrodes (13) stacked on the first and second separation membranes respectively, and each of the first vision unit (121) and the second vision unit (122) are each configured to measure the twisted angle of the first electrode (11).

8. The unit cell (10) aligning device according to claim 7, wherein the first electrode (11) is an anode, and the second electrode (13) is a cathode.

9. The unit cell (10) aligning device according to claim 5, wherein the first vision unit (121) is configured to measure the twisted angle of the electrode (11,13) in a first area of the first conveying unit (111), the gripper (130) is configured to grip the electrode (11,13) in a second area of the first conveying unit (111) adjacent to the first area, and the second vision unit (122) is configured to measure the second twisted angle of the electrode (11,13) in the second area of the first conveying unit (111).

10. The unit cell (10) aligning device according to claim 5, wherein the separation membrane (20) is a first separation membrane, the unit cell (10) aligning device further comprising a second conveying unit (112) that is configured to convey a second separation membrane, the unit cell (10) being disposed on the second separation membrane, wherein the gripper (130) is configured to move the unit cell (10) and is configured to transfer the unit cell (10) to the second conveying unit (112), and the control unit (140) is further configured to control the gripper (130) to maintain the aligned angle and to transfer the unit cell (10) to the second conveying unit.

11. A unit cell (10) aligning method for a unit cell (10) aligning device according to any of the previous claims, said method comprising:
conveying a unit cell (110) including an electrode (11,13) and a separation membrane (12,20) in a first direction;
measuring a twisted angle of the electrode (11,13);
adjusting an angle of the gripper (130) from an aligned angle to a measured twisted angle of the electrode (11,13);
gripping the unit cell (10) with the gripper (130) having the twisted angle; and
returning the gripper (130) so that the angle of the gripper (130) that is gripping the unit cell (10) becomes the aligned angle,
wherein the twisted angle (θ1, θ2)of the electrode (11,13) is an angle formed by a central axis (C1,C2) of the electrode (11,13) relative to a virtual line (V) in a second direction (y) perpendicular to the first direction (x), and
the angle of the gripper (130) is an angle formed by a central axis (C1,C2) of the gripper (130) relative to the virtual line (V) in the second direction (y).

12. The unit cell (10) aligning method according to claim 11, further comprising:
measuring a second twisted angle of the electrode (11,13) after the returning of the gripper (130); and
adjusting the angle of the gripper (130) after the returning from the aligned angle to the second twisted angle of the electrode (11,13).

13. The unit cell (10) aligning method according to claim 12, wherein the conveying of the unit cell (10) in the first direction (x) includes a first conveying of the electrode (11,13) to a first area in which the twisted angle of the electrode (11,13) is measured, and a second conveying of the electrode (11,13) to a second area in which the electrode (11,13) is gripped by the gripper (130).

14. The unit cell (10) aligning method according to claim 13, wherein the measuring of the second twisted angle of the electrode (11,13) is performed in the second area.

## Patentansprüche

1. Einheitszelle-(10)-Ausrichtungsvorrichtung, umfassend:
eine erste Fördereinheit (110), welche dazu eingerichtet ist, eine Einheitszelle (10) zu fördern, welche eine Elektrode (11, 13) und eine Trennungsmembran (20) in einer ersten Richtung umfasst;
eine erste Bildeinheit (121), welche dazu eingerichtet ist, einen verdrehten Winkel einer Elektrode (11, 13) zu messen;
**dadurch gekennzeichnet, dass** die Einheitszelle-(10)-Ausrichtungsvorrichtung ferner umfasst:
eine Greifeinheit (130), welche dazu eingerichtet ist, die Einheitszelle (10) zu greifen und zu bewegen; und
eine Steuereinheit (140), welche dazu eingerichtet ist, die Greifeinheit (130) zu steuern,
wobei die Steuereinheit (140) dazu eingerichtet ist, einen Winkel der Greifeinheit (130) von einem ausgerichteten Winkel zu einem verdrehten Winkel der Elektrode, welcher durch die Bildeinheit (121) gemessen ist, anzupassen, bevor die Greifeinheit (130) die Einheitszelle (10) greift, und die Steuereinheit (140) dazu eingerichtet ist, die Greifeinheit (130) zurückzuführen, sodass der Winkel der Greifeinheit (130) der ausgerichtete Winkel wird, nachdem die Greifeinheit (130) die Einheitszelle (10) greift,
der verdrehte Winkel der Elektrode (11, 13) ein Winkel ist, welcher durch eine Mittelachse (C1, C2) der Elektrode (11, 13) relativ zu einer virtuellen Linie (V) in einer zweiten Richtung (y) gebildet ist, welche senkrecht zu der ersten Richtung (x) ist, und
der Winkel der Greifeinheit (130) ein Winkel ist, welcher durch eine Mittelachse (C1, C2) der Greifeinheit (130) relativ zu der virtuellen Linie (V) in der zweiten Richtung (y) gebildet ist.

2. Einheitszelle-(10)-Ausrichtungsvorrichtung nach Anspruch 1, wobei die Steuereinheit (140) dazu eingerichtet ist, die Greifeinheit (130) von der virtuellen Linie (V) zu dem verdrehten Winkel der Elektrode (11, 13) zu rotieren, bevor die Greifeinheit (130) die Einheitszelle (10) greift.

3. Einheitszelle-(10)-Ausrichtungsvorrichtung nach Anspruch 1, wobei die Elektrode (11, 13) eine erste Elektrode (11) ist und die Trennungsmembran (20) eine erste Trennungsmembran ist, wobei die Einheitszelle (10) ferner eine zweite Trennungsmembran, welche an der ersten Elektrode (11) gestapelt ist, welche entgegengesetzt der ersten Trennungsmembran ist, und zwei zweite Elektroden (13) umfasst, welche jeweils an der ersten und zweiten Trennungsmembran gestapelt sind, und wobei die erste Bildeinheit (121) dazu eingerichtet ist, den verdrehten Winkel der ersten Elektrode (11) zu messen.

4. Einheitszelle-(10)-Ausrichtungsvorrichtung nach Anspruch 3, wobei die erste Elektrode (11) eine Anode ist und die zweite Elektrode (13) eine Kathode ist.

5. Einheitszelle-(10)-Ausrichtungsvorrichtung nach Anspruch 1, ferner umfassend eine zweite Bildeinheit (122), welche dazu eingerichtet ist, einen zweiten verdrehten Winkel der Elektrode zu messen, nachdem die Greifeinheit zurückgeführt ist, wobei die Steuereinheit (140) dazu eingerichtet ist, den Winkel der Greifeinheit (130) von dem ausgerichteten Winkel zu dem zweiten verdrehten Winkel der Elektrode (11, 13) weiter anzupassen, welcher durch die zweite Bildeinheit (122) gemessen ist.

6. Einheitszelle-(10)-Ausrichtungsvorrichtung nach Anspruch 5, wobei die Steuereinheit (140) dazu eingerichtet ist, die Greifeinheit (130) von der virtuellen Linie (V) zu dem zweiten verdrehten Winkel der Elektrode (11, 13) zu rotieren, nachdem die Greifeinheit (130) zurückgeführt ist.

7. Einheitszelle-(10)-Ausrichtungsvorrichtung nach Anspruch 5, wobei die Elektrode (11, 13) eine erste Elektrode (11) ist und die Trennungsmembran (12) eine erste Trennungsmembran ist, wobei die Einheitszelle (10) ferner eine zweite Trennungsmembran, welche an der ersten Elektrode (11) gestapelt ist, welche entgegengesetzt der ersten Trennungsmembran ist, und zwei zweite Elektroden (13) umfasst, welche jeweils an der ersten und zweiten Trennungsmembran gestapelt sind, und wobei jede der ersten Bildeinheit (121) und der zweiten Bildeinheit (122) dazu eingerichtet ist, den verdrehten Winkel der ersten Elektrode (11) zu messen.

8. Einheitszelle-(10)-Ausrichtungsvorrichtung nach Anspruch 7, wobei die erste Elektrode (11) eine Anode ist und die zweite Elektrode (13) eine Kathode ist.

9. Einheitszelle-(10)-Ausrichtungsvorrichtung nach Anspruch 5, wobei die erste Bildeinheit (121) dazu eingerichtet ist, den verdrehten Winkel der Elektrode (11, 13) in einem ersten Bereich der ersten Fördereinheit (111) zu messen, wobei die Greifeinheit (130) dazu eingerichtet ist, die Elektrode (11, 13) in einem zweiten Bereich der ersten Fördereinheit (111) zu greifen, welcher dem ersten Bereich benachbart ist, und wobei die zweite Bildeinheit (122) dazu eingerichtet ist, den zweiten verdrehten Winkel der Elektrode (11, 13) in dem zweiten Bereich der ersten Fördereinheit (111) zu messen.

10. Einheitszelle-(10)-Ausrichtungsvorrichtung nach Anspruch 5, wobei die Trennungsmembran (20) eine erste Trennungsmembran ist, wobei die Einheitszelle-(10)-Ausrichtungsvorrichtung ferner eine zweite Fördereinheit (112) umfasst, welche dazu eingerichtet ist, eine zweite Trennungsmembran zu fördern, wobei die Einheitszelle (10) an der zweiten Trennungsmembran angeordnet ist, wobei die Greifeinheit (130) dazu eingerichtet ist, die Einheitszelle (10) zu bewegen, und dazu eingerichtet ist, die Einheitszelle (10) zu der zweiten Fördereinheit (112) zu überführen, und wobei die Steuereinheit (140) ferner dazu eingerichtet ist, die Greifeinheit (130) zu steuern, um den ausgerichteten Winkel beizubehalten und die Einheitszelle (10) zu der zweiten Fördereinheit zu überführen.

11. Einheitszelle-(10)-Ausrichtungsverfahren für eine Einheitszelle-(10)-Ausrichtungsvorrichtung nach einem der vorhergehenden Ansprüche, das Verfahren umfassend:
Fördern einer Einheitszelle (110), welche eine Elektrode (11, 13) und eine Trennungsmembran (12, 20) umfasst, in einer ersten Richtung;
Messen eines verdrehten Winkels der Elektrode (11, 13);
Anpassen eines Winkels der Greifeinheit (130) von einem ausgerichteten Winkel zu einem gemessenen verdrehten Winkel der Elektrode (11, 13);
Greifen der Einheitszelle (10) mit der Greifeinheit (130), welche den verdrehten Winkel aufweist; und
Zurückführen der Greifeinheit (130), sodass der Winkel der Greifeinheit (130), welcher die Einheitszelle (10) greift, der ausgerichtete Winkel wird,
wobei der verdrehte Winkel (θ1, θ2) der Elektrode (11, 13) ein Winkel ist, welcher durch eine Mittelachse (C1, C2) der Elektrode (11, 13) relativ zu einer virtuellen Linie (V) in einer zweiten Richtung (y) gebildet wird, welche senkrecht zu der ersten Richtung (x) ist, und
wobei der Winkel der Greifeinheit (130) ein Winkel ist, welcher durch eine Mittelachse (C1, C2) der Greifeinheit (130) relativ zu der virtuellen Linie (V) in der zweiten Richtung (y) gebildet wird.

12. Einheitszelle-(10)-Ausrichtungsverfahren nach Anspruch 11, ferner umfassend:
Messen eines zweiten verdrehten Winkels der Elektrode (11, 13), nach dem Zurückführen der Greifeinheit (130); und
Anpassen des Winkels der Greifeinheit (130), nach dem Zurückführen von dem ausgerichteten Winkel zu dem zweiten verdrehten Winkel der Elektrode (11, 13).

13. Einheitszelle-(10)-Ausrichtungsverfahren nach Anspruch 12, wobei das Fördern der Einheitszelle (10) in der ersten Richtung (x) ein erstes Fördern der Elektrode (11, 13) zu einem ersten Bereich, in welchem der verdrehte Winkel der Elektrode (11, 13) gemessen wird, und ein zweites Fördern der Elektrode (11, 13) zu einem zweiten Bereich umfasst, in welchem die Elektrode (11, 13) durch die Greifeinheit (130) gegriffen wird.

14. Einheitszelle-(10)-Ausrichtungsverfahren nach Anspruch 13, wobei das Messen des zweiten verdrehten Winkels der Elektrode (11, 13) in dem zweiten Bereich durchgeführt wird.

## Revendications

1. Dispositif d'alignement de cellule unitaire (10), comprenant :
une première unité de transport (110) qui est configurée pour transporter une cellule unitaire (10) comportant une électrode (11, 13) et une membrane de séparation (20) dans une première direction ;
une première unité de vision (121) qui est configurée pour mesurer un angle de torsion de l'électrode (11, 13) ;
**caractérisé en ce que** le dispositif d'alignement de cellule unitaire (10) comprend en outre
un dispositif de préhension (130) qui est configuré pour saisir et déplacer la cellule unitaire (10) ; et
une unité de commande (140) qui est configurée pour commander le dispositif de préhension (130),
dans lequel l'unité de commande (140) est configurée pour régler un angle du dispositif de préhension (130) d'un angle d'alignement à un angle de torsion de l'électrode mesuré par la première unité de vision (121) avant que le dispositif de préhension (130) ne saisisse la cellule unitaire (10), et l'unité de commande (140) est configurée pour ramener le dispositif de préhension (130) de sorte que l'angle du dispositif de préhension (130) devienne l'angle d'alignement après que le dispositif de préhension (130) a saisi la cellule unitaire (10),
l'angle de torsion de l'électrode (11, 13) est un angle formé par un axe central (C1, C2) de l'électrode (11, 13) par rapport à une ligne virtuelle (V) dans une deuxième direction (y) perpendiculaire à la première direction (x), et
l'angle du dispositif de préhension (130) est un angle formé par un axe central (C1, C2) du dispositif de préhension (130) par rapport à la ligne virtuelle (V) dans la deuxième direction (y).

2. Dispositif d'alignement de cellule unitaire (10) selon la revendication 1, dans lequel l'unité de commande (140) est configurée pour faire tourner le dispositif de préhension (130) de la ligne virtuelle (V) à l'angle de torsion de l'électrode (11,13), avant que le dispositif de préhension (130) ne saisisse la cellule unitaire (10).

3. Dispositif d'alignement de cellule unitaire (10) selon la revendication 1, dans lequel l'électrode (11, 13) est une première électrode (11) et la membrane de séparation (20) est une première membrane de séparation, la cellule unitaire (10) comportant en outre une deuxième membrane de séparation empilée sur la première électrode (11) opposée à la première membrane de séparation et deux deuxièmes électrodes (13) empilées respectivement sur les première et deuxième membranes de séparation, et la première unité de vision (121) est configuré pour mesurer l'angle de torsion de la première électrode (11).

4. Dispositif d'alignement de cellule unitaire selon la revendication 3, dans lequel la première électrode (11) est une anode, et la deuxième électrode (13) est une cathode.

5. Dispositif d' alignement de cellule unitaire (10) selon la revendication 1, comprenant en outre une deuxième unité de vision (122) qui est configurée pour mesurer un deuxième angle de torsion de l'électrode après le retour du dispositif de préhension, dans lequel l'unité de commande (140) est configurée pour régler en outre l'angle du dispositif de préhension (130) de l'angle d'alignement au deuxième angle de torsion de l'électrode (11, 13) mesuré par la deuxième unité de vision (122).

6. Dispositif d'alignement de cellule unitaire (10) selon la revendication 5, dans lequel l'unité de commande (140) est configurée pour faire tourner le dispositif de préhension (130) de la ligne virtuelle (V) au deuxième angle de torsion de l'électrode (11, 13) après le retour du dispositif de préhension (130).

7. Dispositif d'alignement de cellule unitaire (10) selon la revendication 5, dans lequel l'électrode (11, 13) est une première électrode (11) et la membrane de séparation (12) est une première membrane de séparation, la cellule unitaire (10) comportant en outre, une deuxième membrane de séparation empilée sur la première électrode (11) opposée à la première membrane de séparation et deux deuxièmes électrodes (13) empilées respectivement sur les première et deuxième membranes de séparation, et chacune de la première unité de vision (121) et de la deuxième unité de vision (122) sont chacune configurées pour mesurer l'angle de torsion de la première électrode (11).

8. Dispositif d'alignement de cellule unitaire (10) selon la revendication 7, dans lequel la première électrode (11) est une anode, et la deuxième électrode (13) est une cathode.

9. Dispositif d'alignement de cellule unitaire (10) selon la revendication 5, dans lequel la première unité de vision (121) est configurée pour mesurer l'angle de torsion de l'électrode (11, 13) dans une première zone de la première unité de transport (111), le dispositif de préhension (130) est configuré pour saisir l'électrode (11, 13) dans une deuxième zone de la première unité de transport (111) adjacente à la première zone, et la deuxième unité de vision (122) est configurée pour mesurer le deuxième angle de torsion de l'électrode (11,13) dans la deuxième zone de la première unité de transport (111).

10. Dispositif d'alignement de cellule unitaire (10) selon la revendication 5, dans lequel la membrane de séparation (20) est une première membrane de séparation, le dispositif d'alignement de cellule unitaire (10) comprenant en outre une deuxième unité de transport (112) qui est configurée pour transporter une deuxième membrane de séparation, la cellule unitaire (10) étant disposée sur la deuxième membrane de séparation, dans lequel le dispositif de préhension (130) est configuré pour déplacer la cellule unitaire (10) et est configuré pour transférer la cellule unitaire (10) vers la deuxième unité de transport (112), et l'unité de commande (140) est en outre configurée pour commander le dispositif de préhension (130) pour maintenir l'angle d'alignement et pour transférer la cellule unitaire (10) vers la deuxième unité de transport.

11. Procédé d'alignement de cellule unitaire (10) pour un dispositif d'alignement de cellule unitaire (10) selon l'une quelconque des revendications précédentes, ledit procédé comprenant :
un transport d'une cellule unitaire (110) comportant une électrode (11, 13) et une membrane de séparation (12, 20) dans une première direction ;
une mesure d'un angle de torsion de l'électrode (11, 13) ;
un réglage d'un angle du dispositif de préhension (130) d'un angle d'alignement à un angle de torsion mesuré de l'électrode (11, 13) ;
une saisie de la cellule unitaire (10) avec le dispositif de préhension (130) présentant l'angle de torsion ; et
un retour du dispositif de préhension (130) de sorte que l'angle du dispositif de préhension (130) qui saisit la cellule unitaire (10) devienne l'angle d'alignement,
dans lequel l'angle de torsion (θ1, θ2) de l'électrode (11, 13) est un angle formé par un axe central (C1, C2) de l'électrode (11, 13) par rapport à une ligne virtuelle (V) dans une deuxième direction (y) perpendiculaire à la première direction (x), et
l'angle du dispositif de préhension (130) est un angle formé par un axe central (C1, C2) du dispositif de préhension (130) par rapport à la ligne virtuelle (V) dans la deuxième direction (y).

12. Procédé d'alignement de cellule unitaire (10) selon la revendication 11, comprenant en outre :
une mesure d'un deuxième angle de torsion de l'électrode (11, 13) après le retour du dispositif de préhension (130) ; et
un réglage de l'angle du dispositif de préhension (130) après le retour de l'angle d'alignement au deuxième angle de torsion de l'électrode (11, 13).

13. Procédé d'alignement de cellule unitaire (10) selon la revendication 12, dans lequel le transport de la cellule unitaire (10) dans la première direction (x) comporte un premier transport de l'électrode (11, 13) vers une première zone dans laquelle l'angle de torsion de l'électrode (11, 13) est mesuré, et un deuxième transport de l'électrode (11, 13) vers une deuxième zone dans laquelle l'électrode (11, 13) est saisie par le dispositif de préhension (130).

14. Procédé d'alignement de cellule unitaire (10) selon la revendication 13, dans lequel la mesure du deuxième angle de torsion de l'électrode (11, 13) est réalisée dans la deuxième zone.
